# EUROPEAN PATENT APPLICATION

(11) **EP 4 607 059 A1**
(43) Date of publication of application: **27.08.2025**
(21) Application number: 23879237.8
(22) Date of filing: 20.10.2023
(51) Int. Cl.: F16H 1/28, F16H 57/08, F16H 57/028, F03D 15/00

(54) **PARALLEL-STAGE MEDIUM-SPEED SHAFT SYSTEM CONNECTING STRUCTURE FOR WIND TURBINE, AND SHAFT SYSTEM**

(30) Priority: 21.10.2022 CN 202211295149
(71) Applicant: ZF Wind Power (Tianjin) Co., Ltd., Tianjin 300402 (CN); ZF Wind Power Antwerpen NV, 3920 Lommel (BE)
(72) Inventor: WU, Shubin, Tianjin 300402 (CN)
(74) Representative: ZF Friedrichshafen AG
(86) International application number: PCT/CN2023/125801
(87) International publication number: WO 2024/083252

(57) **Abstract**

A wind turbine generator parallel-stage intermediate-speed shaft train connecting structure, comprising a sun shaft (1), a downstream shaft portion, and a high-speed gear (4), wherein the high-speed gear (4) is arranged outside of the downstream shaft portion in an axial direction, an axial position of the downstream shaft portion is fixed relative to a wind turbine generator box (9), and the sun shaft (1) is connected to the high-speed gear (4) by a thin-walled flange ring to allow the thin-walled flange ring to absorb a floating shift of the sun shaft (1) by means of elastic deformation.

## Description

### TECHNICAL FIELD

The present disclosure relates to the field of wind power generation, and particularly to a wind turbine generator parallel-stage intermediate-speed shaft train connecting structure and a shaft train.

### BACKGROUND ART

In the field of wind turbine generators, double-feed asynchronous wind turbine generators have the advantages of small size, corrosion resistance and easy on-site repair and a wide range of applications. The double-feed asynchronous wind turbine generator increases the speed of rotation of the blades and transmits the rotation to the generator, and uses a torque generated by the rotation of the blades to cause a generator rotor to rotate for power generation. This process requires a planetary gear structure for speed variation, in which a sun shaft of a parallel-stage intermediate-speed shaft is unavoidably subjected to floating shift, affecting torque transmission. In order to eliminate this effect, splines between the sun shaft and a follower hollow shaft are usually configured as flexible splines with a gap between their teeth, a high-speed gear outside the hollow shaft transmits a motion to a next stage, and the gap between the teeth of the splines serves to absorb the floating shift of the sun shaft. However, under high-speed operating conditions of the wind turbine generator for an extended period of time, frictions between the teeth of the flexible splines occur, for which, a hardening treatment on surfaces of the teeth of the flexible splines is required and it is necessary to provide a lubrication device to provide a pressure lubricant for lubrication and cooling, which leads in a complex structure of the parallel-stage of the wind turbine generator and difficult maintenance thereof.

### SUMMARY

An objective of the present disclosure is to provide a wind turbine generator parallel-stage intermediate-speed shaft train connecting structure, which simplifies a transmission structure.

According to one aspect of embodiments of the present invention, provided is a wind turbine generator parallel-stage intermediate-speed shaft train connecting structure, comprising a sun shaft, a downstream shaft portion, and a high-speed gear, the high-speed gear being arranged outside of the downstream shaft portion in an axial direction, and an axial position of the downstream shaft portion being fixed relative to a wind turbine generator box, wherein the wind turbine generator parallel-stage intermediate-speed shaft train connecting structure further comprises a thin-walled flange ring, the thin-walled flange ring having an elasticity and being fixedly connected to each of the sun shaft and the high-speed gear to cause the sun shaft to rotate the high-speed gear, so as to allow the thin-walled flange ring to absorb a floating shift of the sun shaft by means of elastic deformation. In the connecting structure, with a rigid connection by means of a thin-walled flange instead of a connection by means of flexible splines, the thin-walled flange does not undergo a relative shift with respect to the sun shaft and the high-speed gear during the operations of the wind turbine generator, a floating shift of the sun shaft is absorbed by the thin-walled flange by means of its own elastic deformation, there is no frictional work between spline teeth of the flexible splines, and no additional cooling and lubrication device is provided, such that the structure of the parallel stages of the wind turbine generator is simplified and the manufacturing and maintenance costs are reduced.

Further, rolling bearings are provided between the downstream shaft portion and the high-speed gear to allow for rotation of the high-speed gear relative to the downstream shaft portion. By providing the rolling bearings, the downstream shaft portion does not need to follow during the rotation of the high-speed gear, reducing the weight of a rotating structure and improving the transmission efficiency of the system; Moreover, an axial length of a secondary transmission structure is reduced, which is conducive to the miniaturization of the wind turbine generator.

Further, the downstream shaft portion is fixedly connected to the wind turbine generator box. By fixedly connecting the downstream shaft portion to the box, the downstream shaft portion provides support only as a rotating shaft for the high-speed gear, such that the stability and transmission efficiency of the system can be improved.

Further, The rolling bearings are configured as a pair of tapered roller bearings arranged in the form of an O. The pair of tapered roller bearings arranged in the form of an O can improve the stability of rotation of the high-speed gear.

Further, outer rings of the rolling bearings are constructed integrally with the high-speed gear. The outer rings of the rolling bearings and the high-speed gear being configured as an integrated structure can further simplify the transmission structure and reduce the weight.

Further, a friction lining is provided on an abutment surface of the thin-walled flange against the sun shaft and the high-speed gear. The provision of the friction lining on the abutment surface enables an increased friction force on the abutment surface of the thin-walled flange against the sun shaft and the high-speed gear to ensure that a torque from the sun shaft is transmitted to the high-speed gear by the friction force, avoiding a shear force on connecting bolts on the thin-walled flange.

Further, connecting pins are further provided on the abutment surface of the thin-walled flange against the sun shaft and the high-speed gear. The provision of the connecting pins allows to provide a rigid limit to the connection between the thin-walled flange and the sun shaft and the high-speed gear, preventing damages to the connecting bolts on the thin-walled flange caused by a shear force after the torque exceeds an upper limit of friction transmission capacity of the abutment surface.

Further, the abutment surface of the thin-walled flange against the sun shaft and the high-speed gear is an end face perpendicular to an axis. The connecting surface being configured as the end surface perpendicular to the axis allows to reduce the difficulty of machining parts and facilitate mounting and repair.

According to another aspect of the embodiments of the present invention, a wind turbine generator parallel-stage intermediate-speed shaft train is provided, which uses the wind turbine generator parallel-stage intermediate-speed shaft train connecting structure of any of the forgoing embodiments and has the advantages of simple structure and easy maintenance.

### BRIEF DESCRIPTION OF THE DRAWINGS

Fig. 1 is a schematic diagram of a wind turbine generator parallel-stage intermediate-speed shaft train connecting structure according to an embodiment; and
Fig. 2 is a schematic diagram of a wind turbine generator parallel-stage intermediate-speed shaft train connecting structure in a comparative example.

The above accompanying drawings are intended to provide detailed descriptions of the implementations of the present disclosure to allow those skilled in the art to understand the technical concept of the present disclosure, and are not intended to limit the present disclosure. For the sake of brevity, the above accompanying drawings only schematically draw structures related to the technical features of the present disclosure, and do not draw the complete structure and all the details strictly according to the actual scale.

### DETAILED DESCRIPTION OF EMBODIMENTS

The present disclosure is hereinafter further described in detail with reference to specific embodiments and accompanying drawings.

The term "embodiment" mentioned herein means that the specific features, structures, or characteristics described in conjunction with the embodiment can be encompassed in at least one embodiment herein. The term appearing at various locations in the description does not necessarily refer to the same embodiment, nor is it limited to mutually exclusive independent or alternative embodiments. Those skilled in the art will appreciate that the embodiments herein may be combined with other embodiments without structural conflicts.

In the description herein, unless otherwise explicitly specified and defined, the technical terms such as "mount", "couple", and "connect" should be understood in a broad sense, for example, they may refer to a flexible connection, a fixed connection, or an integrated connection; For those of ordinary skill in the art, the specific meanings of the above terms in the embodiments of the present application can be understood according to specific situations.

In the descriptions herein, the terms such as "up", "down", "left", "right", "lateral", "longitudinal", "axial", "circumferential", "radial" that indicate orientation or positional relationships are intended to accurately describe the embodiments and to simplify the descriptions, not to limit the parts or structures involved to a particular orientation, mounting or operation in a particular orientation, and are not to be construed as a limitation on the embodiments herein.

In the descriptions herein, the terms "first", "second", etc. are merely used for distinguishing different objects, and are not to be construed as indicating relative importance or limiting the number, particular order or primary-secondary relationship of the mentioned technical features. In the descriptions herein, "a plurality of" means at least two.

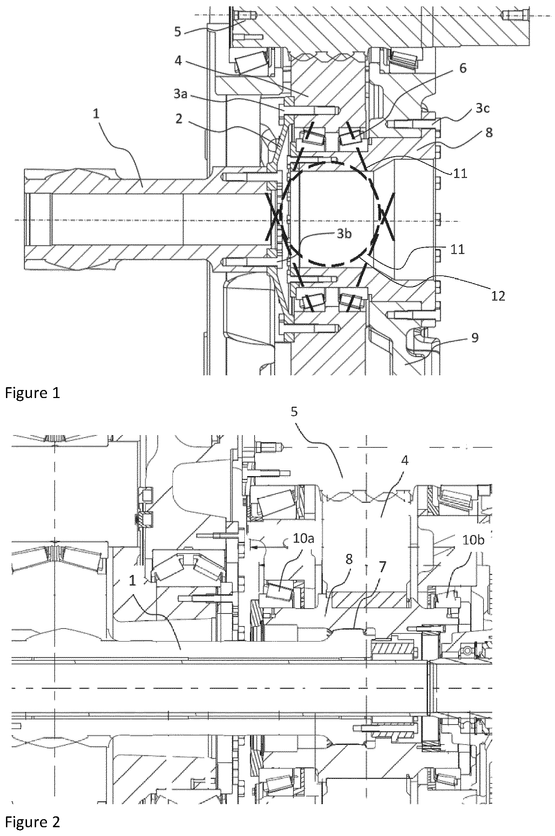

The double-feed asynchronous wind turbine generator provides kinetic energy by means of wind turbine generator blades to drive a generator rotor, and the rotor is excited by AC currents to convert the kinetic energy into electric energy output. A one-stage or multi-stage intermediate-speed shaft is provided between a low-speed shaft for the wind turbine generator blades and a high-speed shaft for the generator rotor, and a gear structure is used to convert a low-speed rotation into a high-speed rotation. In an comparative example of an intermediate-speed shaft train of a wind turbine generator shown in Fig. 2, a preceding stage planetary gear transmission structure (not shown) is connected to a sun shaft 1, the sun shaft 1 engages with a hollow shaft 8 as a downstream shaft portion by means of flexible splines 7, a high-speed gear 4 is circumferentially disposed outside of the hollow shaft 8 and fixedly connected thereto, and the rotation is thus transmitted to an output shaft 5 parallel to the sun shaft 1 to realize torque transmission and an increase in speed of rotation. The sun shaft 1, the hollow shaft 8, and the output shaft 5 form the parallel-stage intermediate-speed shaft train of the wind turbine generator. The inevitable dimensional errors between planetary gears of a planetary gear structure in fit with the sun shaft 1 results in a certain floating shift of an axis of rotation of the sun shaft 1 during transmission, which may reduce the stability of the transmission structure and affect transmission efficiency and increase wear on parts. In view of this, a gap is provided between the spline teeth of the flexible splines 7 that engage with each other to allow for a certain relative movement between the spline teeth of the sun shaft 1 and the hollow shaft 8, so as to absorb the floating shift of the sun shaft 1 by the relative movement between the spline teeth. Rolling bearings 10a and 10b are respectively provided at two ends of the hollow shaft 8 to support and position the hollow shaft 8 so as to ensure that the axis of rotation of the hollow shaft 8 remains fixed relative to a wind turbine generator box. In order to prevent premature wear of the spline teeth of the flexible splines 7 during service, it is necessary to perform hardening treatment on surfaces of the spline teeth to improve the wear resistance of the spline teeth, and it is necessary to provide the flexible splines 7 with a lubrication device for providing a pressure lubricant to cool and lubricate the spline teeth, which results in a complex structure of the parallel-stage, increased manufacturing costs and greater maintenance difficulties of the wind turbine generator.

In order to solve the above problems, an embodiment of one aspect of the present disclosure provides a wind turbine generator parallel-stage intermediate-speed shaft train connecting structure, as shown in Fig. 1. The connecting structure includes a sun shaft 1, a hollow shaft 8 as a downstream shaft portion, and a high-speed gear 4 connected outside of the hollow shaft 8. The sun shaft is axially connected to a planetary gear structure (not shown) of a preceding stage transmission structure, and has the other end connected to a thin-walled flange 2 by means of fixing bolts 3a, and the thin-walled flange 2 is further connected to the high-speed gear 4 by means of bolts 3b. In other embodiments, the thin-walled flange 2 may also be connected to the preceding stage transmission mechanism or the high-speed gear 4 by means of fixed connection such as riveting and welding. An axis of the hollow shaft 8 is fixed relative to the wind turbine generator housing 9, and the thin-walled flange 2 has a certain elasticity, so that the thin-walled flange can absorb the floating shift of the sun shaft 1 by virtue of its own elastic deformation, thereby eliminating centering errors and maintaining stable rotation of the high-speed gear 4. The high-speed gear 4 engages with the output shaft 5 which is arranged parallel to the sun shaft 1, so as to cause the output shaft 5 to rotate, which in turn transmits the torque to the next stage. Since the connecting structure is provided with no flexible spline, and instead, a rigid connecting structure including the thin-walled flange 2 and the bolts 3a, 3b, no sliding friction occurs between the sun shaft 1 and the hollow shaft 8 and the high-speed gear 4, and it is not necessary to provide a specialized lubrication structure to provide pressure lubrication and cooling, so that the overall structure can be simplified, which effectively reducing the manufacturing costs and maintenance difficulties.

In a preferred embodiment, rolling bearings 6 are provided between the high-speed gear 4 and the hollow shaft 8, and the rolling bearings 6 allow the high-speed gear 4 to rotate relative to the hollow shaft 8. This allows the sun shaft 1 to cause only the high-speed gear 4 to rotate during transmission, without the hollow shaft 8 rotating together, which improves the transmission efficiency; On the other hand, the bearing is mounted inside of the high-speed gear 4, so that an axial length of the transmission structure is reduced, facilitating the miniaturization of the wind turbine generator. Moreover, the manufacturing requirements of the hollow shaft 8 are reduced, and more economical casting materials can be used, further reducing the manufacturing costs. In other embodiments, the hollow shaft 8 may be fixedly connected to the high-speed gear 4, but in these embodiments, an additional bearing needs to be provided at a position where the hollow shaft 8 is connected to the wind turbine generator box 9.

In a preferred embodiment, the hollow shaft 8 as the downstream shaft portion is fixedly connected to the wind turbine generator box 9 by means of fixing bolts 3c, which enables the hollow shaft 8 to provide stable support for the high-speed gear 4 to further improve system stability and transmission efficiency.

In a preferred embodiment, the rolling bearings 6 are configured as a pair of tapered roller bearings arranged in the form of an O, i.e. two rolling bearings 6 are configured as tapered roller bearings mounted in a "back-to-back" form, in which each rolling bearing 6 has a load action center (the position of an intersection of two dashed lines 11 on the same bearing) located outside of the bearing, and the tapered rollers of the bearings (the dashed lines 11) have bearing directions that intersect with each other to form an O-shape (as shown by a dashed line 12) and have a relatively large rigid, and the paired tapered roller bearings can provide axial restraint to each other, improving the stability of the transmission of the high-speed gear 4 and reducing vibrations. In other embodiments, the rolling bearings 6 may also be configured as ball bearings or roller bearings.

In a preferred embodiment, a bearing outer ring of each of the rolling bearings 6 is constructed integrally with the high-speed gear 4, i.e. the high-speed gear 4 itself acts as the bearing outer ring, the rollers of the rolling bearing are mounted directly inside of the high-speed gear 4, thereby further reducing the complexity of the transmission structure.

In a preferred embodiment, a friction lining (not shown) is provided on an abutment surface of the thin-walled flange 2 against the sun shaft 1 and the high-speed gear 4 to increase a friction force of the abutment surface, increase the transmission efficiency, reduce fretting wear on an interface and prevent a shear force caused by a torque on the bolts 3a and the bolts 3b during transmission. In a further preferred embodiment, connecting pins (not shown) are also provided on the abutment surface of the thin-walled flange 2 against the sun shaft 1 and the high-speed gear 4, ends of each of the connecting pins are inserted into the thin-walled flange 2 and the sun shaft 1/the high-speed gear 4, respectively. When the torque transmitted exceeds an upper friction force limit of the abutment surface, the connecting pins bear the shear force caused by the torque, thus achieving the transmission of the torque and preventing failures.

In a preferred embodiment, the abutment surface of the thin-walled flange 2 against the sun shaft 1 and the high-speed gear 4 is an end surface perpendicular to its axis. This abutment arrangement, on the one hand reduces the machining difficulty of parts, and on the other hand, facilitating the mounting and maintenance of the thin-walled flange 2. In other embodiments, the abutment surface of the thin-walled flange 2 against the sun shaft 1 and/or the high-speed gear 4 may also be configured as a circumferential side, and in these embodiments, the sun shaft 2 and the high-speed gear 4 need to be rotated to complete the mounting and disassembly operations.

According to another aspect of the embodiments of the present invention, a wind turbine generator parallel-stage intermediate-speed shaft train is provided, which uses the wind turbine generator parallel-stage intermediate-speed shaft train connecting structure of any of the forgoing embodiments and in which a lubrication device is omitted by optimizing the connecting structure, resulting in lower manufacturing costs and easier maintenance.

The above embodiments are intended to provide a further detailed description of the present disclosure with reference to the accompanying drawings to allow those skilled in the art to understand the technical concept of the present disclosure. Within the scope of the claims of the present disclosure, optimization or equivalent substitution of the parts involved or combination of implementations in different embodiments all fall within the scope of protection of the present disclosure without conflicts of structure and principles.

## Claims

1. A wind turbine generator parallel-stage intermediate-speed shaft train connecting structure, comprising a sun shaft, a downstream shaft portion, and a high-speed gear, the high-speed gear being arranged outside of the downstream shaft portion in an axial direction, and an axial position of the downstream shaft portion being fixed relative to a wind turbine generator box, wherein the wind turbine generator parallel-stage intermediate-speed shaft train connecting structure further comprises a thin-walled flange ring, the thin-walled flange ring having an elasticity and being fixedly connected to each of the sun shaft and the high-speed gear to cause the sun shaft to rotate the high-speed gear, so as to allow the thin-walled flange ring to absorb a floating shift of the sun shaft by means of elastic deformation.

2. The wind turbine generator parallel-stage intermediate-speed shaft train connecting structure according to claim 1, wherein rolling bearings are provided between the downstream shaft portion and the high-speed gear to allow for rotation of the high-speed gear relative to the downstream shaft portion.

3. The wind turbine generator parallel-stage intermediate-speed shaft train connecting structure according to claim 2, wherein the downstream shaft portion is fixedly connected to the wind turbine generator box.

4. The wind turbine generator parallel-stage intermediate-speed shaft train connecting structure according to claim 2, wherein the rolling bearings are configured as a pair of tapered roller bearings arranged in the form of an O.

5. The wind turbine generator parallel-stage intermediate-speed shaft train connecting structure according to claim 2, wherein outer rings of the rolling bearings are constructed integrally with the high-speed gear.

6. The wind turbine generator parallel-stage intermediate-speed shaft train connecting structure according to claim 1 or 2, wherein a friction lining is provided on an abutment surface of the thin-walled flange against the sun shaft and the high-speed gear.

7. The wind turbine generator parallel-stage intermediate-speed shaft train connecting structure according to claim 1 or 2, wherein connecting pins are further provided on the abutment surface of the thin-walled flange against the sun shaft and the high-speed gear.

8. The wind turbine generator parallel-stage intermediate-speed shaft train connecting structure according to claim 1 or 2, wherein the abutment surface of the thin-walled flange against the sun shaft and the high-speed gear is an end face perpendicular to an axis.

9. A wind turbine generator parallel-stage intermediate-speed shaft train, comprising a wind turbine generator parallel-stage intermediate-speed shaft train connecting structure according to any one of claims 1 to 8.
